# EUROPEAN PATENT SPECIFICATION

(11) **EP 0 484 869 B1**
(45) Date of publication and mention of the grant of the patent: **09.08.1995**
(21) Application number: 91118819.1
(22) Date of filing: 05.11.1991
(51) Int. Cl.: B29C 47/08

(54) **Extrusion forming apparatus**
Vorrichtung zum Strangpressen
Dispositif de formage par extrusion

(30) Priority: 09.11.1990 JP 305677/90
(43) Date of publication of application: 13.05.1992
(73) Proprietor: NAKATA ZOKI CO., LTD., Kobe-shi, Hyogo-ken (JP)
(72) Inventor: Hiraiwa, Takemi, Kobe-shi, Hyogo-ken (JP); Kokui, Kazuhisa, Miki-shi, Hyogo-ken (JP); Inoue, Kunihei, Takasago-shi, Hyogo-ken (JP)
(74) Representative: Türk, Gille, Hrabal, Leifert

(56) References cited:
- EP-A- 0 270 816
- EP-A- 0 407 756
- DE-A- 3 212 157
- DE-A- 3 637 731
- FR-A- 2 193 705
- PATENT ABSTRACTS OF JAPAN vol. 13, no. 257 (M-837)(3605)14 June 1989 & JP-A-1 061 221 ( BRIDGESTONE CORP. ) 8 March 1989

## Description

The present invention relates to an extrusion forming apparatus having clamping means in a simple structure.

Extruders for extruding rubber or other plastic materials and producing various formings such as sheets and pipes are widely used. In such extruders, for exchanging the nozzles to clean the passage of the plastic materials or changing the shape of extrusion, a movable head is disposed in the head main body part contiguous to the extruder main body, so that the head main body part and the movable head may be separated.

However, since a passage is formed between the head main body part and movable head, and a plastic material of high pressure passes through this passage, a strong separating force acts, and it is required to clamp the two very firmly.

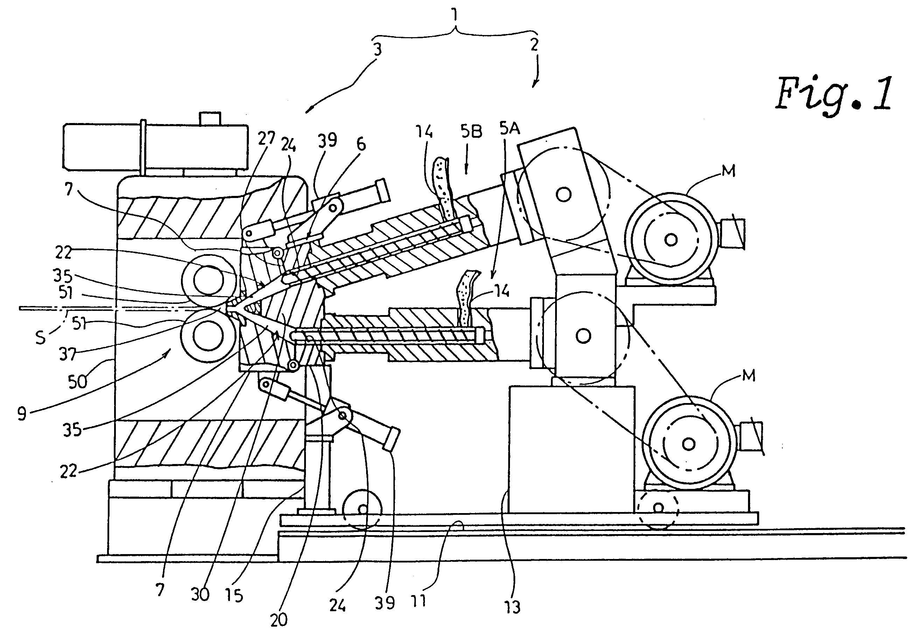

In particular, as schematically shown in Fig. 1, where plural extruder main bodies 5A, 5B are provided, movable heads 7, 7 are attached to the upper and lower part of the head main body part 6, and the separating force is large, and hence it is required to seal the joint surfaces by firm clamping.

For such clamping, hitherto, a powerful hydraulic cylinder was used as described m EP 0 270 816 A1, or a toggle mechanism was employed.

Where the hydraulic cylinder is used, if a boosting mechanism is combined, the size of the hydraulic cylinder becomes large, and a hydraulic cylinder is needed on every movable head, and the apparatus cost increases and the maintainability is impaired. On the other hand, where the toggle mechanism is used, the construction is complicated, and high precision linking is needed, and the manufacturing cost soars.

Accordingly, it is hence a primary object of the invention to present an extrusion forming apparatus simple in structure and capable of tightening securely.

According to the present invention an extrusion forming apparatus (1) comprises an extruder (2) which has a head main body part (6) with two extruder main bodies (5A, 5B) intersecting obliquely at an acute angle and which are mounted to the rear side (F) thereof, a pair of movable heads (7) coupled to the head main body part (6) and forming when clamped a nozzle opening (37) communicating with the extruder main bodies (5A, 5B) at the front end thereof and a clamping machine (3) which clamps the head main body part (6) and the movable heads (7). Said head main body part (6) is provided with a base part (20) having an upper and a lower notch (22) and a surface (26) protruding from said base part for defining said two notches and exposing passages (24) in said base part communicating with the rubber exits of the extruder main bodies (5A, 5B) and an inner surface (27) extending from the rear edge of the protruding surface (26) at an obtuse angle of 90°. Furthermore said movable heads (7) are disposed in the notch parts (22), and each having a covering surface (31) abutting against the protruding surface (26) for forming a path (35) communicating with the passage (24) and a rear surface (32) abutting against the inner surface (27). A groove is disposed in the middle part of the covering surface (31) of each of the movable heads (7) or on the protruding surface (26) for forming a path communicating with the passage (24) in said base part when the heads are clamped and said head main body part (6) is provided with a first stopping piece (41) projecting on the side surface thereof and having a first stopping surface (43) inclining backwardly toward the side surface of the head main body part (6). Each of said movable heads (7) is provided with a second stopping piece (42) projecting on the side surface thereof and having a second stopping surface (44) extending in a direction forming one side of a triangle together with a covering surface (31) and a rear surface (32). Said clamping machine (3) comprises a portal flame standing between a pair of side plates inside of which are provided upper and lower pushing pieces (53) and a clamp piece (55) attached to a pushing tool (56) provided on the side plates, wherein the pushing pieces (53) having contact surfaces (54) abutting against the second stopping surfaces (44), and the clamp piece (55) is capable of moving in and out toward the side surface of the head main body part (6) and abutting against and pressing the first stopping surface (43) of the first stopping piece (41) by moving toward the side surface of the head main body part (6).

As mentioned above, on the side surface of the head main body part of the extruder having the extruder main body attached to the back side, a first stopping piece having the rear end as a slope is disposed, and on the side surface of the movable head, a second stopping piece is disposed. The clamping machine has a pushing piece with a contact surface abutting against the second stopping piece, and a clamp piece for pressing the first stopping piece in the contact state.

The second stopping piece and the pushing piece contact with each other, and the first stopping piece and the clamp piece are engaged with each other in a wedge form to press, so that the movable head is brought closer to the head main body part to press and clamp the joint surfaces, thereby preventing leak of the plastic material. Besides, the second stopping surface contacting with the pushing piece of the second stopping piece forms a side of a triangle together with the covering surface and rear surface which are joint surfaces with the head main body part, so that the clamping force will achieve contact of the Joint surfaces more efficiently by its partial force.

An embodiment of the present invention will now be described by way of example, referring the attached drawings, in which;
Fig. 1 is a sectional view showing an embodiment of the invention.
Fig. 2 is a front view schematically showing first and second stopping pieces, pushing piece and clamp piece.
Fig. 3 is a perspective view thereof.
Fig. 4 is a partial plan view showing its action.
Fig. 5 is a front view showing other example of clamping machine.
Fig. 6 is a sectional view showing a head main body part and movable heads.
Fig. 7 is an exploded view showing a head main body part and movable heads.

Figs. 1 to 7 represent an embodiment in which the extrusion forming apparatus 1 of the invention is employed as a rubber extrusion forming apparatus for rubber extrusion.

The extrusion forming apparatus 1 comprises an extruder 2 and a clamping machine 3, and the clamping machine 3 is provided with a thickness adjusting device 9 with roll for adjusting the thickness of a sheet S being extruded from the extruder 2.

As shown in Fig. 1, the extruder 2 is mounted on a carriage moving back and forth on a rail 11 extending from the clamping machine 3. The extruder 2 comprises an extruder main body 5A disposed horizontally on a support base 13, and an extruder main body 5B disposed above it. The extruder 2 is formed as a picker back type rubber extrusion apparatus for extruding in a sheet form, in this embodiment, by laminating different rubber materials.

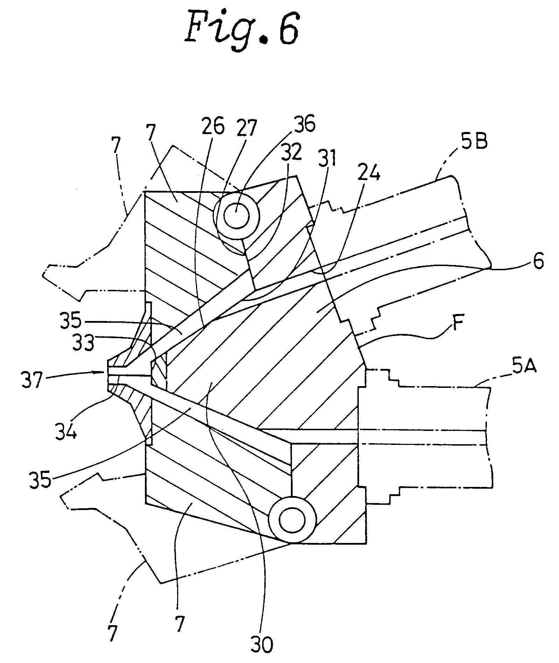

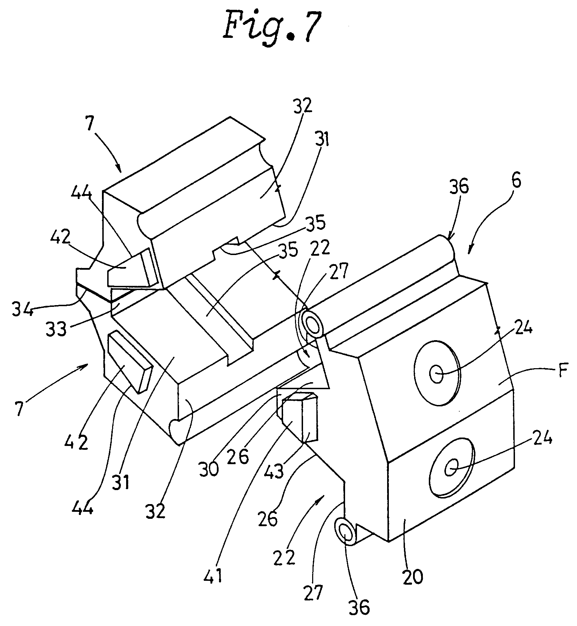

The extruder main bodies 5A, 5B , as shown in Fig. 6,7, intersect obliquely at an acute angle, and their front ends are coupled with bolts to the rear surface F bent in a V-form of the head main body part 6. Meanwhile, the extruder main bodies 5A, 5B have the known constitution for kneading and fusing the rubber charged from an inlet 14 by means of a screw shaft driven by a motor M through an orthogonal reduction gear.

The head main body part 6 is supported on the carriage through support bases 15, and has a base part 20 made of a slender block for forming sheets. The base part 20 has upper and lower notches 22, 22 in an L-form having its front upper and lower parts cut off.

By these notches 22, 22, the base part 20 of the head main body part 6 is provided with a protruding surface 26 for exposing passages 24, 24 communicating with the rubber exit of the extruder main bodies 5A, 5B, and an inner surface 27 crossing at an obtuse angle of 90 degrees or over 90 degrees with the protruding surface 26 from the rear edge of the protruding surface 26. As the upper and lower protruding surfaces 26, 26 approach toward the forward side, the base part 20 has a tapered nose part 30 projecting forward.

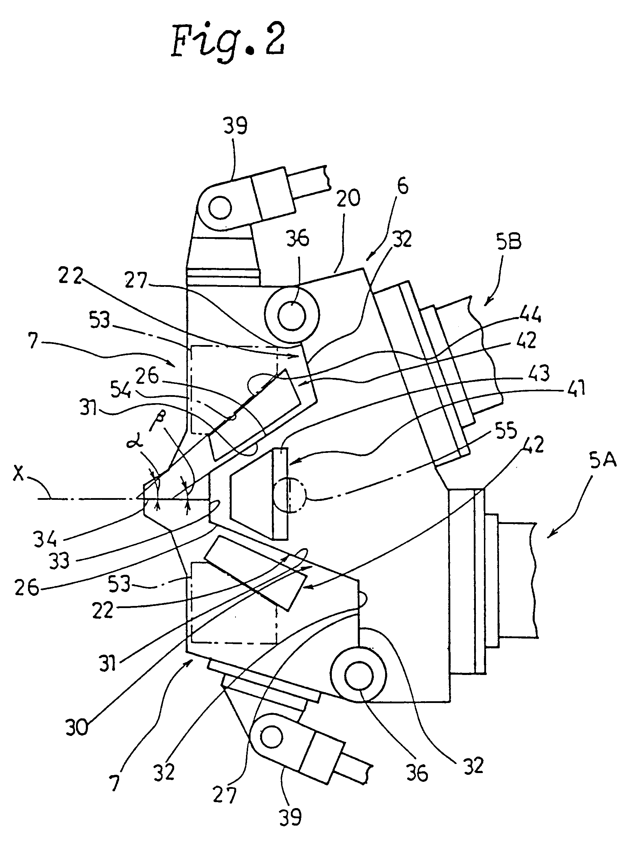

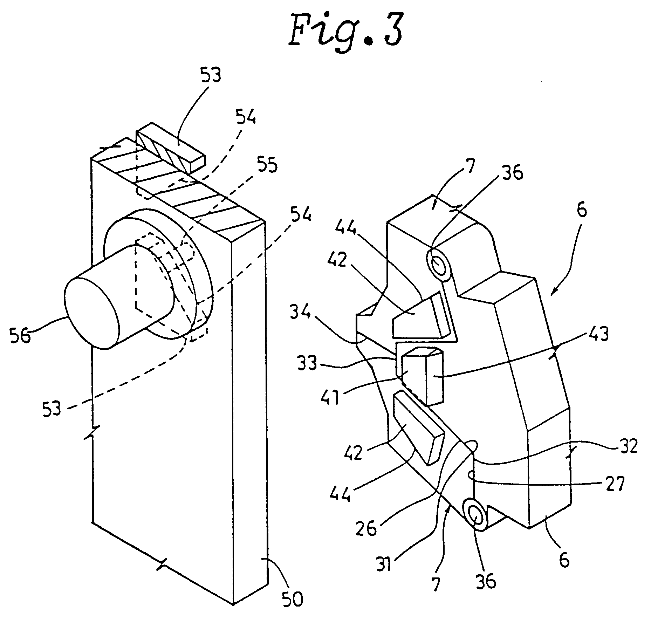

The upper and lower notches 22, 22 are provided with upper and lower movable heads 7, 7. The movable head 7 comprises, as schematically shown in Figs. 2, 3, a covering surface 31 abutting against the protruding surface 26, and a rear surface 32 abutting against the inner surface 27, and also form, in this embodiment, a contact surface 33 abutting against the front face of the nose part 30, and a sectional surface 34 contacting with the upper and lower movable heads 7, 7. The protruding surface 26 and/or covering surface 31 has a proper groove disposed in the middle part in the widthwise direction, and forms a path 35 communicating with the passage 24 as shown in Fig. 1. The upper and lower movable heads 7, 7 form a nozzle opening 37 at the front end through the converging part of the path 35. The nozzle opening 37 may be formed by using a nozzle fitting which is detachably fitted to the movable head.

The movable heads 7, 7 are pivoted by pivoting parts 36, 36 at the upper and lower ends of the base part 20, and are rotated by the upper and lower cylinders 39, thereby opening the notches 22, 22.

The head main body part 6 has a first stopping piece 41 provided on its side surface. The movable heads 7 has second stopping pieces 42, 42 provided on their surfaces.

The first stopping piece 41 is composed of a trapezoidal plate projecting from the side of the nose part 30, and the rear end behind the center line of the head main body part 6 forms a first stopping surface 43 composed of a slope inclined backward toward the side surface. The second stopping pieces 42, 42 are made of plates projecting from the side of the movable head 7, and the side remote from the covering surface 31 forms a second stopping surface 44 of a side forming a triangle together with the covering surface 31 and the rear surface 32. Therefore, the angle formed by the second stopping surface 44 and the axial line X is greater than the angle formed by the covering surface 31 and the axial line X.

The clamping machine 3 has a portal frame standing between a pair of side plates 50, 50 set up on the floor with a base by way of a proper linkage plate, and has the thickness adjusting device 9 with upper and lower rolls 51, 51 disposed between the side plates 50, 50. Inside of the side plates 50 and ahead of the rolls 51, there are upper and lower pushing pieces 53, 53 having contact surfaces 54, 54 abutting against the second stopping surfaces 44, 44 of the upper and lower second stopping pieces 42, 42. The contact surfaces 54, 54 are inclined at the same angle as the angle of the second stopping surfaces 44.

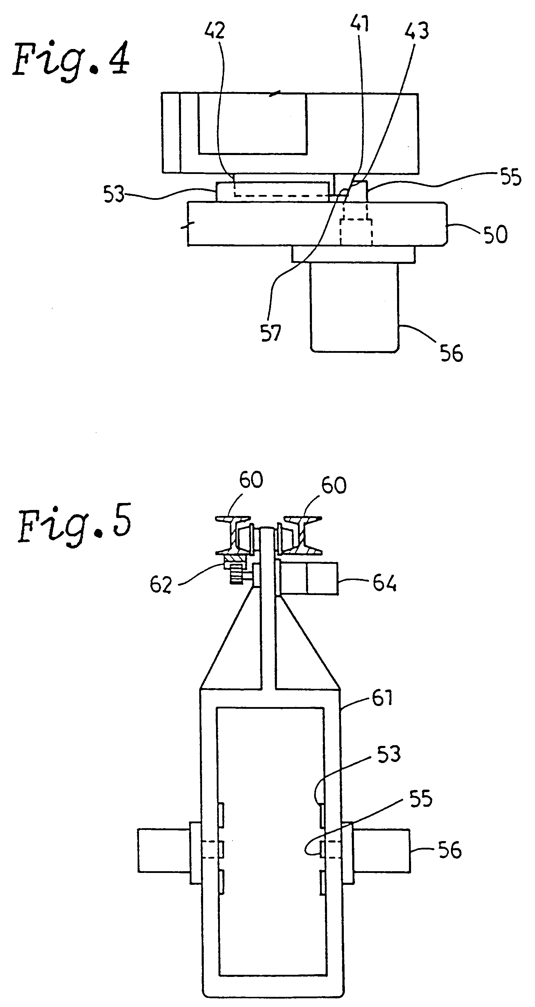

The side plate 50 is provided with cylinder or other pushing tool 56 having a clamp piece 55 for abutting and pressing against the first stopping surface 43 of the first stopping piece 41 by moving in and out toward the head main body part 6, in the state of the contact surface 54 abutting against the second stopping surface 44. Meanwhile, the clamp piece 55 has a slope, cutting off at the same angle as the first stopping surface 43, as schematically shown in Fig. 4. Therefore, as the clamp piece 55 moves out, the movable head 7 held by the contact surface 54 and the head main body part 6 pressed by the clamp piece 55 are clamped in the approaching direction. Consequently, the protruding surface 26 and covering surface 31, the inner surface 27 and rear surface 32 are mutually in contact with each other, thereby preventing leak of rubber. At the same time, the contact surface 33 and sectional surface 34 are brought to a tight contact.

The second stopping surface 44 forms a side of a triangle inclined to the covering surface 31 together with the rear surface 32, and hence the force in the axial line X acting on the first stopping surface 43 exerts partial forces on the covering surface 31 and rear surface 32, so that the both surfaces may be brought to a tight contact.

The clamp piece 55 moves backward, and then the extruder 2 moves on the rail 11 so as to be separated from the clamping machine 3. As a result, it is unclamped, and the cylinder 39 is contracted, and the movable heads 7, 7 are opened, thereby replacing the nozzles or cleaning the passage. Afterwards, the extruder 2 is moved forward, and clamped by the clamping machine 3 as mentioned above.

In the apparatus of the invention, while fixing the extruder 2 on the floor, the clamping machine 3 may be movable. At this time, the clamping machine 3 may run on the rail installed on the floor, or a pressing tool 56 having a clamp piece 55 and the pushing piece 53 may be disposed on a rectangular frame 61 movably mounted on the rails 60, 60 straddling above as shown in Fig. 5. In this case, the apparatus of the invention may be modified in various ways, such as automatic running by means of a reduction motor 64 having pinions to be engaged with a rack 62 disposed in the lower surface of the rail 60.

As previously described, the extrusion forming apparatus of the invention is simple in constitution in which the first stopping piece is disposed in the head main body part and the second stopping piece in the movable head, and the clamping machine is provided with pushing piece and clamp piece, and is capable of clamping firmly by making use of the wedge action, reducing the weight and saving the space, and also saving the cost by producing by simple processing, and is also excellent in maintainability.

## Claims

1. An extrusion forming apparatus (1) comprising an extruder (2) which has a head main body part (6) with two extruder main bodies (5A, 5B) intersecting obliquely at an acute angle and which are mounted to the rear side (F) thereof, a pair of movable heads (7) coupled to the head main body part (6) and forming when clamped a nozzel opening (37) communicating with the extruder main bodies (5A, 5B) at the front end thereof, a clamping machine (3) which clamps the head main body part (6) and the movable heads (7), said head main body part (6) is provided with a base part (20) having an upper and a lower notch (22) and a surface (26) protruding from said base part for defining said two notches and exposing passages (24) in said base part communicating with the rubber exits of the extruder main bodies (5A, 5B) and an inner surface (27) extending from the rear edge of the protruding surface (26) at an obtuse angle of 90°, said movable heads (7) are disposed in the notch parts (22), and each having a covering surface (31) abutting against the protruding surface (26) for forming a path (35) communicating with the passage (24) and a rear surface (32) abutting against the inner surface (27),
**characterized in that**
a groove is disposed in the middle part of the covering surface (31) of each of the movable heads (7) or on the protruding surface (26) for forming a path communicating with the passage (24) in said base part when the heads are clamped,
said head main body part (6) is provided with a first stopping piece (41) projecting on the side surface thereof and having a first stopping surface (43) inclining backwardly toward the side surface of the head main body part (6),
each of said movable heads (7) is provided with a second stopping piece (42) projecting on the side surface thereof and having a second stopping surface (44) extending in a direction forming one side of a triangle together with a covering surface (31) and a rear surface (32), and
said clamping machine (3) comprises a portal frame standing between a pair of side plates inside of which are provided upper and lower pushing pieces (53) and a clamp piece (55) attached to a pushing tool (56) provided on the side plates, wherein the pushing pieces (53) having contact surfaces (54) abutting against the second stopping surfaces (44), and the clamp piece (55) is capable of moving in and out toward the side surface of the head main body part (6) and abutting against and pressing the first stopping surface (43) of the first stopping piece (41) by moving toward the side surface of the head main body part (6).

## Patentansprüche

1. Eine Vorrichtung zum Strangpressen (1) mit einem Extruder (2) enthaltend einen Hauptkörper eines Kopfteils (6) mit zwei Extruderhauptkörpern (5a, 5B), welche sich in Querrichtung in einem stumpfen Winkel schneiden und an dessen Rückseite (F) montiert sind, und enthaltend ein Paar beweglicher Kopfteile (7), welche an den Hauptkörper eines Kopfteils (6) angekoppelt sind und in verspanntem Zustand eine Düsenöffnung (37) bilden, die mit den Extruderhauptkörpern (5A, 5B) an deren Vorderseite kommunizieren, sowie mit einer Spannvorrichtung (3), welche den Hauptkörper eines Kopfteils (6) und die beweglichen Kopfteile (7) miteinander verspannt, wobei dieser Hauptkörper eines Kopfteils (6) mit einer Grundplatte (20) ausgestattet ist, die eine obere und untere Kerbe (22) und eine Fläche (26) besitzt, welche aus der Grundplatte herausragt, um zwei Kerben zu bilden und Speisekanäle (24) in dieser Grundplatte freizulegen, welche mit den Auslaßöffnungen für gummiartige Materialien der Extruderhauptkörper (5A, 5B) kommunizieren, und mit einer Innenfläche (27), welche sich von der rückwärtigen Kante der herausragenden Fläche (26) in einem stumpfen Winkel von 90° erstreckt, wobei diese beweglichen Kopfteile (7) in die Kerben (22) eingesetzt sind und jeweils eine Abdeckfläche (31) aufweisen, die an der herausragenden Fläche (26) anliegt, um auf diese Weise einen Pfad (35) zu bilden, welcher mit dem Speisekanal (24) kommuniziert, und mit einer rückwärtigen Fläche (32), welche an der Innenfläche (27) anliegt,
**dadurch gekennzeichnet**, **daß**
eine Nut in dem mittleren Teil der Abdeckfläche (31) der beweglichen Kopfteile (7) oder auf der herausragenden Fläche (26) angeordnet ist, um einen Pfad zu bilden, welcher mit dem Speisekanal (24) in der Grundplatte kommuniziert, wenn die Kopfteile untereinander verspannt sind, und dadurch, daß der Hauptkörper eines Kopfteils (6) mit einem ersten Anschlag (41) versehen ist, welcher sich an einer seiner Seiten erstreckt, und dadurch, daß eine erste Anschlagsfläche (43) nach rückwärts gegen die Seitenfläche des Hauptkörpers eines Kopfteils (6) geneigt ist, und dadurch, daß jeder der beweglichen Kopfteile (7) mit einem zweiten Anschlag (42) ausgerüstet ist, welcher sich an deren Seitenfläche erstreckt, und dadurch, daß eine zweite Anschlagsfläche (44) vorgesehen ist, welche sich in einer Richtung erstreckt, die zusammen mit einer Abdeckfläche (31) und einer rückwärtigen Fläche (32) eine Seite eines Dreiecks bildet, und dadurch, daß die Spannvorrichtung (3) einen Portalrahmen aufweist, welcher zwischen zwei Seitenwänden aufgestellt ist, zwischen denen obere und untere Schubelemente (53) vorgesehen sind, und daß ein Spannelement (55) vorgesehen ist, welches an einem auf den Seitenwänden montierten Vorschubwerkzeug (56) befestigt ist, und daß die Schubelemente (53) Kontaktflächen (54) aufweisen, welche an den zweiten Anschlagsflächen (44) anliegen, und dadurch, daß sich das Spannelement (55) nach innen und außen gegen die Seitenfläche des Hauptkörpers eines Kopfteils (6) bewegen kann und an der ersten Anschlagsfläche (43) zum Anschlag kommt und diese erste Anschlagsfläche (43) des ersten Anschlagteils (41) dadurch verpreßt, daß es sich in Richtung der Seitenfläche des Hauptkörpers eines Kopfteils (6) bewegt.

## Revendications

1. Dispositif de formage par extrusion (1) comprenant une extrudeuse (2) qui comporte une partie formant tête de corps principal (6) ayant deux corps principaux d'extrudeuse (5A, 5B) se recoupant obliquement en formant un angle aigu et qui sont montés sur le côté arrière (F) de celle-ci, une paire de têtes mobiles (7) reliées à la partie formant tête de corps principal (6) et formant lorsqu'elles sont serrées une ouverture de buse (37) communiquant avec les corps principaux d'extrudeuse (5A, 5B) au niveau de l'extrémité avant de celle-ci, une machine de serrage (3) qui serre la partie formant tête de corps principal (6) et les têtes mobiles (7), ladite partie formant tête de corps principal (6) étant pourvue d'une partie formant socle (20) ayant une entaille supérieure et une entaille inférieure (22) et une surface en saillie (26) depuis ladite partie formant socle pour définir lesdites deux entailles et découvrir des passages (24) dans ladite partie formant socle communiquant avec les sorties du caoutchouc des corps principaux d'extrudeuse (5A, 5B) et une surface intérieure (27) s'étendant depuis le bord arrière de la surface en saillie (26) en faisant un angle de 90°, lesdites têtes mobiles (7) étant disposées dans les parties formant entailles (22), chacune ayant une surface de couverture (31) venant en butée contre la surface en saillie (26) pour former une voie (35) communiquant avec le passage (24) et une surface arrière (32) venant en butée contre la surface intérieure (27),
caractérisé en ce que
une rainure est présente dans la partie centrale de la surface de couverture (31) de chacune des têtes mobiles (7) ou sur la surface en saillie (26) pour former une voie communiquant avec le passage (24) dans ladite partie formant socle lorsque les têtes sont serrées,
ladite partie formant tête de corps principal (6) est pourvue d'une première pièce d'arrêt (41) en saillie sur la surface latérale de celles-ci et comportant une première surface d'arrêt (43) inclinée vers l'arrière en direction de la surface latérale de la partie formant tête de corps principal (6),
chacune desdites têtes mobiles (7) est pourvue d'une seconde pièce d'arrêt (42) en saillie sur la surface latérale de celle-ci et comportant une seconde surface d'arrêt (44) qui s'étend dans une direction formant un côté d'un triangle avec la surface de couverture (31) et la surface arrière (32), et
ladite machine de serrage (3) comprend un portique qui se trouve entre une paire de plaques latérales à l'intérieur desquelles sont disposées des pièces de poussée supérieure et inférieure (53) et une pièce de serrage (55) fixée à un outil de poussée (56) disposé sur les plaques latérales, dans laquelle les pièces de poussée (53) ayant des surfaces de contact (54) venant en butée contre les seconde surfaces d'arrêt (44), et la pièce de serrage (55) étant capable de mouvements alternatif vers la surface latérale de la partie formant tête de corps principal (6) et venant en butée contre la première surface d'arrêt (43) de la première pièce d'arrêt (41) et la pressant en se déplaçant vers la surface latérale de la partie formant tête de corps principal (6).
